# EUROPÄISCHE PATENTSCHRIFT

(11) **EP 1 248 024 B1**
(45) Veröffentlichungstag und Bekanntmachung des Hinweises auf die Patenterteilung: **05.07.2006**
(21) Anmeldenummer: 02006320.2
(22) Anmeldetag: 21.03.2002
(51) Int. Cl.: F16J 15/08

(54) **Zylinderkopfdichtung**
Cylinder head gasket
Joint de culasse

(30) Priorität: 05.04.2001 DE 10117178
(43) Veröffentlichungstag der Anmeldung: 09.10.2002
(60) Teilanmeldung: 05010444.7
(73) Patentinhaber: ElringKlinger AG, 72581 Dettingen (DE)
(72) Erfinder: Werz, Ulrich, 72581 Dettingen/Erms (DE); Diez, Armin, 73252 Lenningen (DE)
(74) Vertreter: Sparing Röhl Henseler Patentanwälte European Patent Attorneys

(56) Entgegenhaltungen:
- EP-A- 0 740 092
- EP-A- 0 797 029
- EP-A- 0 950 842
- EP-A- 1 179 695

## Beschreibung

Die Erfindung betrifft eine metallische Zylinderkopfdichtung nach dem Oberbegriff des Anspruchs 1.

Aus EP 0 306 766 B1 oder EP 0 230 804 B1 ist eine metallische Zylinderkopfdichtung für eine Brennkraftmaschine bekannt, bei der ein Trägerblech zusammen mit mindestens einem gesickten, elastischen Deckblech als Funktionsblech vorgesehen sind. Da sich der Dichtspalt zwischen Zylinderkopf und Zylinderblock einer Brennkraftmaschine im Betrieb in Abhängigkeit vom Arbeitstakt des jeweils betrachteten Zylinders ändert, ist die Dichtung ständigen Pressungsänderungen unterworfen und muß zur Aufrechterhaltung einer einwandfreien Abdichtung dauerhafte Federungseigenschaften aufweisen. Hierzu wird die um die jeweilige Brennkammeröffnung herum verlaufende, als Federelement wirkende Sicke durch einen entlang des Brennkammerrandes angeordneten Federwegbegrenzer oder Stopper geschützt, der den Federweg der Sicke, die den auftretenden, vertikal zur Dichtungsebene erfolgenden Relativbewegungen des Zylinderkopfes gegenüber dem Zylinderblock folgt, begrenzt, so daß sich die Sicke nur in dem für sie vorgesehenen Federwegbereich bewegt und nicht platt gedrückt werden kann. Hierzu darf auch die Entlastung der Sicke nicht vollständig sein, sondern nur soweit erfolgen, daß eine Mindestverformung beim höchsten auftretenden Brennraumdruck die erforderliche Abdichtung sicherstellt. Der Federwegbegrenzer bildet eine sich entlang des Brennkammerrandes erstreckende Überhöhung der Zylinderkopfdichtung.

Für Brennkraftmaschinen mit Zylinderlaufbüchsen sind derartige Dichtungen jedoch ungeeignet, da die Einleitung vertikaler Kräfte, die beim Einspannen der bzw. bei eingespannter Dichtung auftreten, am Brennkammerrand und damit im wesentlichen in die Zylinderlaufbüchse erfolgt, so daß Kippmomente auftreten.

Aus EP 0 740 092 A1 ist deshalb eine metallische Zylinderkopfdichtung für eine Brennkraftmaschine bekannt, die Zylinderlaufbüchsen aufweist. Diese umfaßt wenigstens ein gesicktes Deckblech und ein Trägerblech und ist mit einem für die jeweilige Sicke vorgesehenen, eine Überhöhung für die Dichtung bildenden Verformungsbegrenzer versehen, der durch einen Ring auf dem Trägerblech gebildet wird und auf der der Brennkammeröffnung abgewandten Seite der Sicke angebracht ist, so daß er sich auf dem Büchsenbund abstützt.

Aus DE 195 13 360 C1 ist eine metallische Zylinderkopfdichtung für eine Brennkraftmaschine bekannt, bei der wenigstens ein gesicktes Deckblech und ein Trägerblech vorgesehen sind, wobei um jede Öffnung herum entlang des Brennkammerrandes ein Verformungsbegrenzer für die jeweilige Sicke vorgesehen ist. Der Verformungsbegrenzer ist dabei entsprechend der Bauteilsteifigkeit von Zylinderkopf und -block in Umfangsrichtung höhen- und/oder breitenprofiliert, um eine möglichst gleichmäßige Preßkraftverteilung zu erreichen. Ferner kann hierbei neben dem inneren Verformungsbegrenzer auch ein äußerer Verformungsbegrenzer auf der in bezug zur Brennkammeröffnung abgewandten Seite der jeweiligen Sicke vorgesehen sein, um hierdurch eine möglichst vertikal zur Dichtungsebene erfolgende Krafteinleitung in den Sickenbereich zu erzielen.

Eine Zylinderkopfdichtung gemäß dem Oberbegriff der Ansprüchen 1, 12 ist aus dem Dokument EP-A-0950842 bekannt.

Vor allem bei Brennkraftmaschinen mit Zylinderlaufbuchsen hat sich herausgestellt, daß selbst bei Verwendung eines höhen- und/oder breitenprofilierten äußeren Verformungsbegrenzers immer wieder Probleme hinsichtlich der Dichtheit der Zylinderkopfdichtung auftreten. Dieses Problem konnte auch nicht dadurch gelöst werden, daß zusätzlich ein entsprechender innerer Verformungsbegrenzer verwendet wurde.

Aufgabe der Erfindung ist es daher, eine Zylinderkopfdichtung nach dem Oberbegriff des Anspruchs 1 zu schaffen, die ein verbessertes Dichtverhalten zeigt.

Diese Aufgabe wird entsprechend dem kennzeichnenden Teil des Anspruchs 1 gelöst.

Dadurch, daß ein Verformungsbegrenzer verwendet wird, wobei bei der Höhen- und/oder Breitenprofilierung des Verformungsbegrenzers zusätzlich die Preßdruckerhöhung infolge durch die während des Betriebs auftretenden Temperaturen beispielsweise bei etwa 60 bis 100% der Vollast der Brennkraftmaschine, insbesondere bei maximaler Auslastung zu erwartender Wärmedehnungen derart berücksichtigt ist, daß die Profilierung im wesentlichen entsprechend einem Mittelbereich zwischen Preßdruckerhöhung durch Wärmedehnungen und Preßdruckerniedrigung durch Bauteilsteifigkeiten ausgebildet ist, läßt sich die Dichtheit der Zylinderkopfdichtung erhöhen. Dies trifft insbesondere bei Brennkraftmaschinen mit schmalen Stegen zwischen den Brennkammern zu, da von diesen Stegen offenbar die Wärmeabfuhr schlechter als von anderen Bereichen des Zylinderblocks ist, so daß sich dort die Wärmedehnungen stärker bemerkbar machen und zu unzulässigen Pressungserhöhungen führen, da bisher im Bereich der Stege von einer geringeren Bauteilsteifigkeit bzw. einer erhöhten -nachgiebigkeit ausgegangen und damit der Verformungsbegrenzer höher als in anderen Bereichen ausgebildet wurde, so daß dann unzulässige Preßdrücke erreicht wurden, die zu bleibenden Verformungen der Motorbauteile und damit zu Undichtigkeiten sowie letztlich sogar zu vermehrten Sickenrissen führten. In diesem Zusammenhang ist zu bemerken, daß der Arbeitsbereich der Sicken dementsprechend auf die auf Betriebstemperatur befindliche Brennkraftmaschine ausgerichtet ist.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt in Draufsicht ausschnittweise eine Zylinderkopfdichtung.
Fig. 2 bis 4 zeigen Schnitte entsprechend der Linie I-I von Fig. 1 für unterschiedliche Ausführungsformen der Zylinderkopfdichtung.
Fig. 5 zeigt ein Diagramm bezüglich der Steifigkeit und Preßkraft in Abhängigkeit zum Schraubenabstand über einen Teilbereich eines Verformungsbegrenzers.
Fig. 6 zeigt ein Diagramm bezüglich der Temperaturdehnung der Bauteile einer Brennkraftmaschine über den in Fig. 5 betrachteten Bereich.
Fig. 7 zeigt ein Diagramm bezüglich einer Optimierung der Höhenprofilierung eines Verformungsbegrenzers.
Fig. 8 und 9 zeigen zwei Schnitte entsprechend den Linien I-I und II-II von Fig. 1 einer weiteren Ausführungsform einer Zylinderkopfdichtung.
Fig. 10 zeigt einen Schnitt entsprechend der Linie I-I einer zusätzlichen Ausführungsform einer Zylinderkopfdichtung.
Fig. 11 zeigt einen Schnitt entsprechend der Linie I-I einer gegenüber Fig. 10 geänderten Ausführungsform.
Fig. 12 zeigt einen Schnitt längs der Linie I-I von Fig. 1 einer zusätzlichen Ausführungsform.
Fig. 13 zeigt einen Schnitt längs der Linie I-I von Fig. 1 einer weiteren Ausführungsform.

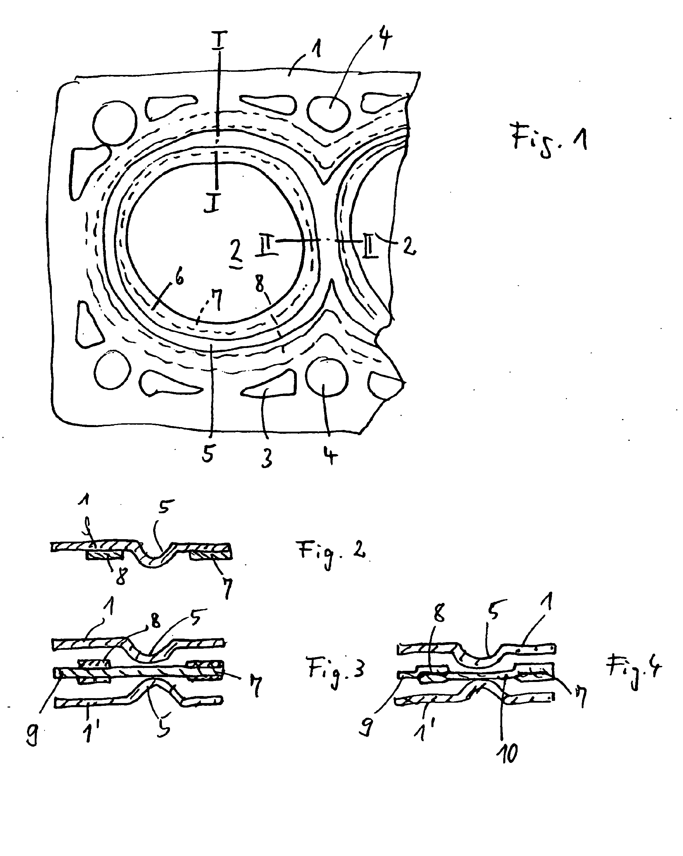

Die in Fig. 1 in Draufsicht ausschnittweise dargestellte Zylinderkopfdichtung umfaßt ein elastisches, üblicherweise aus Federstahl hergestelltes Deckblech 1, das mit einer Reihe von benachbart nebeneinander angeordneten, jeweils durch einen schmalen Steg getrennten Brennkammeröffnungen 2 entsprechend den Brennkammern einer Brennkraftmaschine sowie ferner mit Fluiddurchtrittsöffnungen 3 etwa für Kühlwasser bzw. Öl und Schraubendurchtrittsöffnungen 4 für Schrauben versehen ist, die zum Verspannen von Zylinderblock und Zylinderkopf der Brennkraftmaschine verwendet werden. Das Deckblech 1 ist mit Sicken 5 versehen, die mit Abstand unter Belassung eines geraden Blechabschnitts 6 im Randbereich der Brennkammeröffnung 2 angeordnet sind. Um die übrigen Öffnungen 3, 4 herum sind ebenfalls hier nicht dargestellte Abdichtungen wie Halbsicken oder Raupen aus gummielastischem Material vorgesehen.

Für die jeweilige Sicke 5 ist entlang der Brennkammeröffnung 2 ein innerer Verformungsbegrenzer 7 vorgesehen. Statt dessen oder zusammen hiermit ist ferner ein äußerer Verformungsbegrenzer 8 vorgesehen, der sich bezüglich der Sicke 5 auf der der Brennkammeröffnung 2 abgewandten Seite der Sicke 5 befindet. Beide Verformungsbegrenzer 7, 8 befinden sich auf der Seite des Deckblechs 1, zu der die Sicke 5 gewölbt ist, um deren Federweg begrenzen zu können.

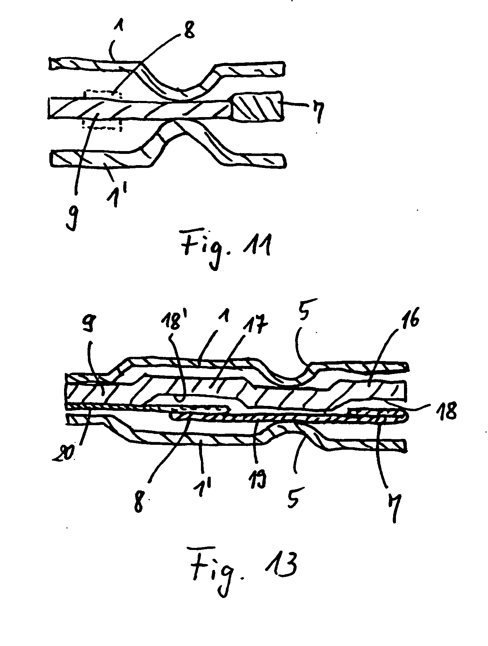

Der oder die Verformungsbegrenzer 7, 8 können an dem Deckblech 1 oder an einem separaten Träger- oder Falzblech 9 bzw. 10 angeordnet sein, vgl. Fig. 2 bis 4, wobei zudem ein zweites, elastisches, gesicktes Decklech 1' vorgesehen sein kann und dann vorzugsweise der Verformungsbegrenzer 7 bzw. 8 bezüglich der beiden spiegelsymmetrisch zueinander angeordneten Deckbleche 1, 1' vermittelt ist. Wenn der Verformungsbegrenzer 7 bzw. 8 aus Metall besteht, kann er aufgeschweißt sein. Er kann aber auch aus einem stark gefüllten Kunststoff bestehen und beispielsweise durch Siebdrucken aufgebracht sein. Auch kann er durch andere Verfahren wie Plasmaspritzen aufgebracht oder ferner angeformt sein, vgl. Fig. 10.

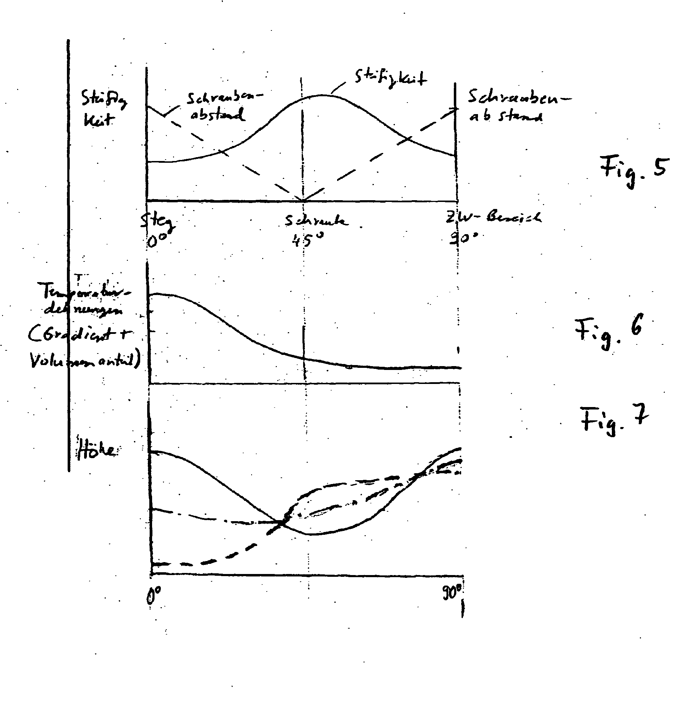

Wie in Fig. 5 dargestellt ist, ergibt sich unter der Voraussetzung, daß der Verformungsbegrenzer 7 bzw. 8 eine gleichbleibende Höhe aufweist, eine entsprechend dem Schraubenabstand kontinuierliche, durch gleichmäßig angezogene Schrauben erzeugte, auf die so eingespannte Zylinderkopfdichtung ausgeübte Preßkraftabnahme (gestrichelt eingezeichnet) von einer Schraube zur anderen bis zum Mittelbereich zwischen zwei benachbarten Schrauben, die hier an den Ecken eines Quadrats angeordnet sind. Fig. 5 betrachtet dementsprechend den Bereich von der Mitte des Stegs (0°) zwischen zwei Brennkammeröffnungen 2 bis zur Linie I-I (90°). Die Bauteilsteifigkeit (durchgezogen dargestellt) ist demgegenüber im Bereich der Schraubendurchtrittsöffnung 4 am größten und fällt zum Schraubenzwischenbereich hin ab.

Nicht berücksichtigt sind hier zusätzliche Änderungen der Bauteilsteifigkeit aufgrund von entsprechenden Kanälen bzw. Öffnungen in den Bauteilen entsprechend den Fluiddurchtrittsöffnungen 3 und auch aufgrund von Bereichen geringerer Wandstärke etwa im Zylinderkopf. Diese können die beiden in Fig. 5 dargestellten Kurven verändern bzw. teilweise verschieben.

In Fig. 6 ist die Temperaturausdehnung für den in Fig. 5 dargestellten Bereich dargestellt. Ersichtlich ist dieser im Bereich des Stegs am größten, zumal dieser dünn ist und die Wärmeabfuhr aus diesem Bereich gegenüber anderen Bereichen relativ schlecht ist. Auch diese Kurve wird durch kältere Bereiche etwa benachbart zu Kühlwasserkanälen entsprechend beeinflußt. Dies ist hier nicht berücksichtigt.

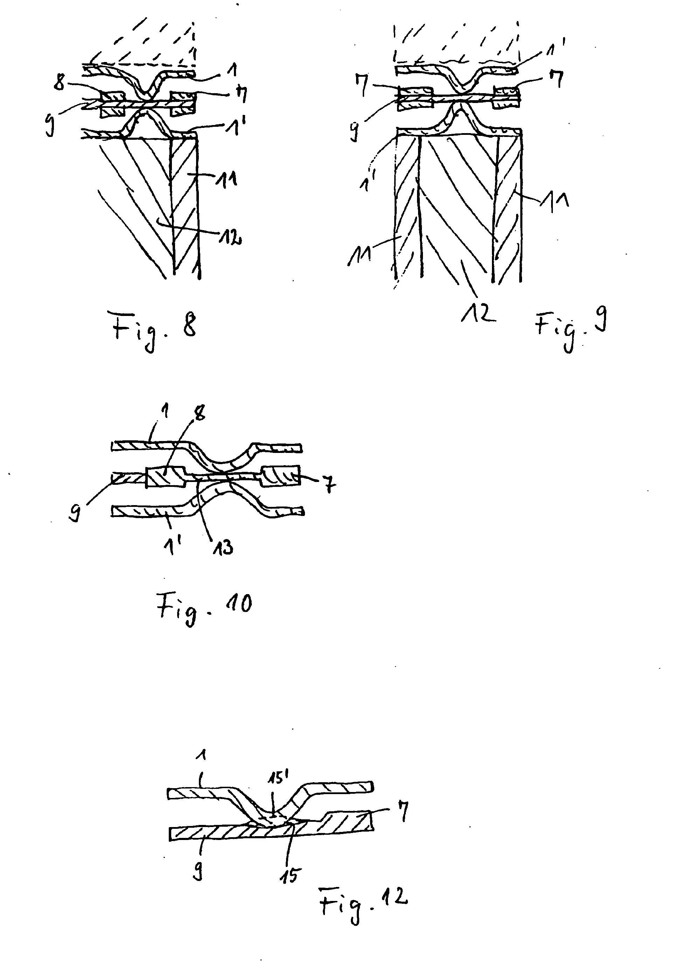

In Fig. 7 ist eine Höhenprofilierung des Verformungsbegrenzers 7 bzw. 8 für den gleichen Bereich, wie er in den Fig. 5 und 6 betrachtet wird, einerseits zur Kompensation der Bauteilsteifigkeitsänderungen (durchgezogen) und andererseits zur Kompensation der Temperaturdehnungen (gestrichelt) dargestellt. Um beide Effekte zu berücksichtigen, ist die tatsächliche Höhenprofilierung des Verformungsbegrenzers 7 bzw. 8 im wesentlichen entsprechend einem Mittelbereich zwischen Preßdruckerhöhung durch Wärmedehnungen und Preßdruckerniedrigung durch Bauteilsteifigkeiten ausgebildet (strichpunktiert).

Auf diese Weise ist es möglich, bleibende Verformungen an den Motorbauteilen zu reduzieren oder gar zu verhindern. Es treten weniger Sickenrisse auf.

Bei der in Fig. 8, 9 im Schnitt entsprechend den Linien I-I und II-II von Fig. 1 dargestellten Zylinderkopfdichtung handelt es sich um eine solche für eine Brennkraftmaschine mit Zylinderlaufbuchsen 11, die in entsprechende Bohrungen eines Zylinderblocks 12 eingesetzt sind und die Brennkammern bilden. Hierbei kann es sich z.B. um einen Zylinderblock 12 aus einer Aluminiumlegierung und um Zylinderlaufbuchsen 11 aus Grauguß handeln. Im Stegbereich zwischen zwei benachbarten Brennkammern laufen beim dargestellten Ausführungsbeispiel die Sicken 5 zu einer gemeinsamen Sicke zusammen. Die äußeren Verformungsbegrenzer 8 umgeben die Sicken 5 brillenartig.

Hierbei kann vorteilhafterweise auch eine "radiale" Höhenprofilierung vorgesehen sein, indem je nach Bauteilsteifigkeit und Temperaturdehnung der innere Verformungsbegrenzer 7 höher oder niedriger als oder gleich hoch (radial zur Brennkammerachse oder in Längsrichtung der Brennkraftmaschine betrachtet) wie der äußere Verformungsbegrenzer 8 ausgebildet sein kann.

Bei der in Fig. 10 dargestellten Ausführungsform werden der innere und äußere Verformungsbegrenzer 7, 8 an einem eingelegten Ring 13 durch angestauchte Ränder hiervon gebildet, wobei die Ränder beim Anstauchen gleichzeitig entsprechend höhen- und/oder breitenprofiliert werden. Durch das Anstauchen wird die Dauerfestigkeit des Verformungsbegrenzers 7 bzw. 8 erhöht und die Kantenpressung gering gehalten werden, wobei ein leichte Balligkeit oder Abschrägung des Verformungsbegrenzers 7 bzw. 8 radial nach außen dies zusätzlich unterstützt.

Bei der in Fig. 11 dargestellten Ausführungsform ist der Verformungsbegrenzer 7 als separater Ring ausgebildet, der in eine entsprechende Öffnung des Trägerblechs 9 eingelegt und mit diesem beispielsweise durch Schweißen verbunden ist.

Auch können, wie in Fig. 12 dargestellt, im Sickenaufstandsbereich auf dem Trägerblech 9 sich in Umfangsrichtung erstreckende Vertiefungen 15 (beispielsweise Prägungen) und/oder Erhöhungen (beispielsweise Auftragungen) 15' vorgesehen sein, die das Profil des Trägerblechs 9 im Sickenaufstandsbereich entsprechend ändern, wobei diese Profiländerungen des Trägerblechs 9 zur Anpassung der Eckpunkte des Sickenarbeitsbereichs an konstruktiv vorgegebene Auslegungspunkte gegebenenfalls unter Berücksichtigung der im Betrieb auftretenden Temperaturdehnungen dienen.

Bei der in Fig. 13 dargestellten Ausführungsform ist das Trägerblech 9 brennkammerseitig mit einem abgekröpften Abschnitt 16 sowie auf der der Brennkammer abgewandten Seite der Sicke 5 mit einer etwa trapezförmigen Sicke 17 versehen. Der Abschnitt 16 und die Sicke 17 bilden jeweils eine zur Sicke 5 konzentrische Fläche 18, 18', die entsprechend mit einer Höhenprofilierung im wesentlichen entsprechend einem Mittelbereich zwischen Preßdruckerhöhung durch Wärmedehnungen und Preßdruckerniedrigung durch Bauteilsteifigkeiten versehen ist und jeweils mit einem Verformungsbegrenzer 7 bzw. 8 konstanter Höhe zusammenwirken. D.h. die Höhen- und gegebenenfalls Breitenprofilierung ist hier am Trägerblech 9 etwa mittels entsprechendem Prägen vorgesehen, so daß insgesamt der durch die Verformungsbegrenzer 7 bzw. 8 verdickte Bereich zwischen den Deckblechen 1, 1' die entsprechende Profilierung aufweist. Hierbei wird der innere Verformungsbegrenzer 7 durch den am Brennkammerrand umgefalzten Rand eines Falzblechrings 19 gebildet, während der äußere Verformungsbegrenzer 8 durch die Überlappung zwischen dem Falzblechring 19 und einem Beilageblech 20 gebildet wird.

Die Erfindung ist auch auf Zylinderkopfdichtungen anwendbar, die nur eine Brennkammeröffnung aufweisen.

## Patentansprüche

1. Metallische Zylinderkopfdichtung für eine einen benachbarte Brennkammern aufweisenden Zylinderblock und einen damit durch Schrauben verbundenen Zylinderkopf aufweisende Brennkraftmaschine, mit wenigstens einer Blechlage (1) aus elastischem Metall, die mit einer oder mehreren Brennkammeröffnungen (2) entsprechend den Brennkammern der Brennkraftmaschine sowie mit Fluid- und Schraubendurchtrittsöffnungen (3, 4) versehen ist, wobei um jede Brennkammeröffnung (2) herum mit Abstand zu dieser unter Belassung eines geraden Blechabschnitts (6) im Öffnungsrandbereich eine Sicke (5) vorgesehen ist, deren Federweg durch einen sich konzentrisch zur Sicke (5) erstreckenden Verformungsbegrenzer (7, 8) begrenzt ist, wobei der Verformungsbegrenzer (7, 8) entsprechend der in bestimmten Bereichen aufgrund verminderter Bauteilsteifigkeit von Zylinderblock und Zylinderkopf im eingespannten Zustand der Zylinderkopfdichtung zu erwartenden Preßdruckerniedrigungen höhen- und/oder breitenprofiliert ist, **dadurch gekennzeichnet, daß** bei der Höhen- und/oder Breitenprofilierung des Verformungsbegrenzers (7, 8) zusätzlich die Preßdruckerhöhung infolge durch die Betriebstemperatur der Brennkraftmaschine zu erwartender Wärmedehnungen derart berücksichtigt ist, daß die Profilierung im wesentlichen entsprechend einem Mittelbereich zwischen Preßdruckerhöhung durch Wärmedehnungen und Preßdruckerniedrigung durch Bauteilsteifigkeiten ausgebildet ist oder daß der Verformungsbegrenzer (7, 8) eine gleichbleibende Höhe aufweist und ein Trägerblech (9) mit einer Höhenprofilierung versehen ist, so daß sich insgesamt eine Profilierung im wesentlichen entsprechend einem Mittelbereich zwischen Preßdruckerhöhung durch Wärmedehnungen und Preßdruckerniedrigung durch Bauteilsteifigkeiten ergibt, wobei der Verformungsbegrenzer (7, 8) im Bereich der Höhenprofilierung des Trägerblechs (9) angeordnet ist.

2. Zylinderkopfdichtung nach Anspruch 1, **dadurch gekennzeichnet, daß** die Höhenprofilierung der Verformungsbegrenzer (7, 8) geprägt ist.

3. Zylinderkopfdichtung nach Anspruch 1 oder 2, **dadurch gekennzeichnet, daß** die Höhe des Verformungsbegrenzers (7, 8) im Stegbereich zwischen zwei benachbarten Brennkammeröffnungen (2) gegenüber der Höhe im Bereich von benachbarten Schraubendurchtrittsöffnungen (4) erniedrigt ist.

4. Zylinderkopfdichtung nach einem der Ansprüche 1 bis 3, **dadurch gekennzeichnet, daß** auf beiden Seiten der jeweiligen Sicke (5) ein Verformungsbegrenzer (7, 8) angeordnet ist.

5. Zylinderkopfdichtung nach Anspruch 4, **dadurch gekennzeichnet, daß** der innere Verformungsbegrenzer (7) höher als der äußere Verformungsbegrenzer (8) ist.

6. Zylinderkopfdichtung nach Anspruch 4, **dadurch gekennzeichnet, daß** der innere Verformungsbegrenzer (7) gleich hoch wie der äußere Verformungsbegrenzer (8) ist.

7. Zylinderkopfdichtung nach Anspruch 4, **dadurch gekennzeichnet, daß** der innere Verformungsbegrenzer (7) niedriger als der äußere Verformungsbegrenzer (8) ist.

8. Zylinderkopfdichtung nach einem der Ansprüche 1 bis 3, **dadurch gekennzeichnet, daß** nur ein innerer oder ein äußerer Verformungsbegrenzer (7, 8) für jede der Sicken (5) vorgesehen ist.

9. Zylinderkopfdichtung nach einem der Ansprüche 1 bis 8, **dadurch gekennzeichnet, daß** der jeweilige Verformungsbegrenzer (7, 8) an einem Ring (13) oder Trägerblech (9) angestaucht ist.

10. Zylinderkopfdichtung nach einem der Ansprüche 1 bis 8, **dadurch gekennzeichnet, daß** der jeweilige Verformungsbegrenzer (7, 8) als separater Ring bzw. Ringabschnitt ausgebildet ist.

11. Zylinderkopfdichtung nach einem der Ansprüche 1 bis 10, **dadurch gekennzeichnet, daß** zwei gesickte Deckbleche (1, 1') vorgesehen sind, die spiegelsymmetrisch zueinander mit den Sickenscheiteln einander zugewandt angeordnet sind, zwischen denen sich die Verformungsbegrenzer (7, 8), gegebenenfalls an einem separaten Trägerblech (9), befinden.

12. Metallische Zylinderkopfdichtung für eine einen benachbarte Brennkammern mit Zylinderlaufbuchsen (11) aufweisenden Zylinderblock (12) und einen damit durch Schrauben verbundenen Zylinderkopf aufweisende Brennkraftmaschine, mit wenigstens einem Deckblech (1, 1') aus elastischem Metall und einem Trägerblech (9), die mit einer oder mehreren Brennkammeröffnungen (2) entsprechend den Brennkammern der Brennkraftmaschine sowie mit Fluid- und Schraubendurchtrittsöffnungen (3, 4) versehen sind, wobei das wenigstens eine Deckblech (1, 1') um jede Brennkammeröffnung (2) herum mit Abstand zu dieser unter Belassung eines geraden Blechabschnitts (6) im Öffnungsrandbereich eine Sicke (5) aufweist, deren Federweg durch einen sich konzentrisch zur Sicke (5) auf deren Außenseite erstreckenden, von dem Trägerblech (9) getragenen, äußeren Verformungsbegrenzer (8) begrenzt ist, wobei der äußere Verformungsbegrenzer (8) entsprechend der in bestimmten Bereichen aufgrund verminderter Bauteilsteifigkeit von Zylinderblock und Zylinderkopf im eingespannten Zustand der Zylinderkopfdichtung zu erwartenden Preßdruckerniedrigungen höhen- und/oder breitenprofiliert ist, **dadurch gekennzeichnet, daß** die Sicken (5) in einem Abstand zum Brennkammerrand angeordnet sind, so daß sie sich auf dem Zylinderblock (12) benachbart zu den Zylinderlaufbuchsen (11) abstützen, und daß auf der Innenseite der jeweiligen Sicke (5) ein innerer, vom Trägerblech (9) getragener, bezüglich der Bauteilsteifigkeit breiten- und/oder höhenprofilierter Verformungsbegrenzer (7) vorgesehen ist und bei der Höhen- und/oder Breitenprofilierung des Verformungsbegrenzers (7, 8) zusätzlich die Preßdruckerhöhung infolge durch die Betriebstemperatur der Brennkraftmaschine zu erwartender Wärmedehnungen derart berücksichtigt ist, daß die Profilierung im wesentlichen entsprechend einem Mittelbereich zwischen Preßdruckerhöhung durch Wärmedehnungen und Preßdruckerniedrigung durch Bauteilsteifigkeiten ausgebildet ist, oder daß der Verformungsbegrenzer (7, 8) eine gleichbleibende Höhe aufweist und ein Trägerblech (9) mit einer Höhenprofilierung versehen ist, so daß sich insgesamt eine Profilierung im wesentlichen entsprechend einem Mittelbereich zwischen Preßdruckerhöhung durch Wärmedehnungen und Preßdruckerniedrigung durch Bauteilsteifigkeiten ergibt, wobei der Verformungsbegrenzer (7, 8) im Bereich der Höhenprofilierung des Trägerblechs (9) angeordnet ist.

13. Zylinderkopfdichtung nach Anspruch 12, **dadurch gekennzeichnet, daß** die Höhenprofilierung der Verformungsbegrenzer (7, 8) geprägt ist.

14. Zylinderkopfdichtung nach Anspruch 12 oder 13, **dadurch gekennzeichnet, daß** die Höhe der Verformungsbegrenzer (7, 8) im Stegbereich zwischen zwei benachbarten Brennkammeröffnungen (2) gegenüber der Höhe im Bereich von benachbarten Schraubendurchtrittsöffnungen (4) erniedrigt ist.

15. Zylinderkopfdichtung nach einem der Ansprüche 12 bis 14, **dadurch gekennzeichnet, daß** der innere Verformungsbegrenzer (7) höher als der äußere Verformungsbegrenzer (8) ist.

16. Zylinderkopfdichtung nach einem der Ansprüche 12 bis 14, **dadurch gekennzeichnet, daß** der innere Verformungsbegrenzer (7) gleich hoch wie der äußere Verformungsbegrenzer (8) ist.

17. Zylinderkopfdichtung nach einem der Ansprüche 12 bis 14, **dadurch gekennzeichnet, daß** der innere Verformungsbegrenzer (7) niedriger als der äußere Verformungsbegrenzer (8) ist.

18. Zylinderkopfdichtung nach einem der Ansprüche 12 bis 17, **dadurch gekennzeichnet, daß** der jeweilige Verformungsbegrenzer (7, 8) an einem Ring (13) oder Trägerblech (9) angestaucht ist.

19. Zylinderkopfdichtung nach einem der Ansprüche 12 bis 18, **dadurch gekennzeichnet, daß** der jeweilige Verformungsbegrenzer (7, 8) als separater Ring bzw. Ringabschnitt ausgebildet ist.

## Claims

1. Metallic cylinder head gasket for an internal combustion engine having a cylinder block with adjacent combustion chambers and a cylinder head connected to the said block by bolts, having at least one sheet metal layer (1) of resilient metal, which is provided with one or more combustion chamber openings (2) corresponding to the combustion chambers of the internal combustion engine, and also fluid and bolt passage openings (3, 4), where, around each combustion chamber opening (2), at a distance from the latter, leaving a straight sheet metal section (6) in the opening edge area, a bead (5) is provided, whose spring travel is limited by a deformation limiter (7, 8) extending concentrically with respect to the bead (5), the deformation limiter (7, 8) being profiled in terms of height and/or width in accordance with reductions in compression pressure to be expected in specific areas on account of reduced component stiffness of cylinder block and cylinder head in the clamped state of the cylinder head gasket, **characterized in that** when profiling the height and/or width of the deformation limiter (7, 8), the increase in the compression pressure as a result of thermal expansions to be expected because of the operating temperature of the internal combustion engine is additionally taken into account in such a way that the profiling is designed substantially in accordance with a mid-range between an increase in compression pressure resulting from thermal expansions and a decrease in compression pressure resulting from component stiffnesses, or that the deformation limiter (7, 8) has a constant height and a carrier plate (9) is provided with a height profile so that, overall, the result is profiling that substantially corresponds to a mid-range between an increase in compression pressure resulting from thermal expansions and a decrease in compression pressure resulting from component stiffnesses, the deformation limiter (7, 8) being arranged in the area of the height profiling of the carrier plate (9).

2. Cylinder head gasket according to Claim 1, **characterized in that** the height profiling of the deformation limiter (7, 8) is embossed.

3. Cylinder head gasket according to Claim 1 or 2, **characterized in that** the height of the deformation limiter (7, 8) in the web area between two adjacent combustion chamber openings (2) is reduced with respect to the height in the area of adjacent bolt passage openings (4).

4. Cylinder head gasket according to one of Claims 1 to 3, **characterized in that** a deformation limiter (7, 8) is arranged on both sides of the respective bead (5).

5. Cylinder head gasket according to Claim 4, **characterized in that** the inner deformation limiter (7) is higher than the outer deformation limiter (8).

6. Cylinder head gasket according to Claim 4, **characterized in that** the inner deformation limiter (7) is as high as the outer deformation limiter (8).

7. Cylinder head gasket according to Claim 4, **characterized in that** the inner deformation limiter (7) is lower than the outer deformation limiter (8).

8. Cylinder head gasket according to one of Claims 1 to 3, **characterized in that** only an inner or an outer deformation limiter (7, 8) is provided for each of the beads (5).

9. Cylinder head gasket according to one of Claims 1 to 8, **characterized in that** the respective deformation limiter (7, 8) is upset on a ring (13) or carrier plate (9).

10. Cylinder head gasket according to one of Claims 1 to 8, **characterized in that** the respective deformation limiter (7, 8) is designed as a separate ring or ring section.

11. Cylinder head gasket according to one of Claims 1 to 10, **characterized in that** two beaded top plates (1, 1') are provided, which are arranged with mirror symmetry to one another with the bead vertices facing each other and between which the deformation limiters (7, 8) are located, possibly on a separate carrier plate (9).

12. Metallic cylinder head gasket for an internal combustion engine having a cylinder block (12) with adjacent combustion chambers having cylinder liners (11) and a cylinder head connected to the said block by bolts, having at least one top plate (1, 1') made of resilient metal and a carrier plate (9), which are provided with one or more combustion chamber openings (2) corresponding to the combustion chambers of the internal combustion engine, and also fluid and bolt passage openings (3, 4), where, around each combustion chamber opening (2), at a distance from the latter, leaving a straight sheet metal section (6) in the opening edge area, the at least one top plate (1, 1') has a bead (5) whose spring travel is limited by an outer deformation limiter (8) extending concentrically with respect to the bead (5) on its outer side and carried by the carrier plate (9), the outer deformation limiter (8) being profiled in terms of height and/or width in accordance with reductions in compression pressure to be expected in specific areas on account of reduced component stiffness of cylinder block and cylinder head in the clamped state of the cylinder head gasket, **characterized in that** the beads (5) are arranged at a distance from the combustion chamber edge, so that they are supported on the cylinder block (12) adjacent to the cylinder liners (11), and **in that**, on the inner side of the respective bead (5), a deformation limiter (7) is provided which is carried by the carrier plate (9) and is profiled in terms of width and/or height with respect to the component stiffness and, when profiling the height and/or width of the deformation limiter (7, 8), the increase in the compression pressure as a result of thermal expansions to be expected because of the operating temperature of the internal combustion engine is additionally taken into account in such a way that the profiling is designed substantially in accordance with a mid-range between an increase in compression pressure resulting from thermal expansions and a decrease in compression pressure resulting from component stiffnesses, or that the deformation limiter (7, 8) has a constant height and a carrier plate (9) is provided with a height profile so that, overall, the result is profiling that substantially corresponds to a mid-range between an increase in compression pressure resulting from thermal expansions and a decrease in compression pressure resulting from component stiffnesses, the deformation limiter (7, 8) being arranged in the area of the height profiling of the carrier plate (9).

13. Cylinder head gasket according to Claim 12, **characterized in that** the height profiling of the deformation limiter (7, 8) is embossed.

14. Cylinder head gasket according to Claim 12 or 13, **characterized in that** the height of the deformation limiters (7, 8) in the web area between two adjacent combustion chamber openings (2) is reduced with respect to the height in the area of adjacent bolt passage openings (4).

15. Cylinder head gasket according to Claims 12 to 14, **characterized in that** the inner deformation limiter (7) is higher than the outer deformation limiter (8).

16. Cylinder head gasket according to one of Claims 12 to 14, **characterized in that** the inner deformation limiter (7) is as high as the outer deformation limiter (8).

17. Cylinder head gasket according to one of Claims 12 to 14, **characterized in that** the inner deformation limiter (7) is lower than the outer deformation limiter (8).

18. Cylinder head gasket according to one of Claims 12 to 17, **characterized in that** the respective deformation limiter (7, 8) is upset on a ring (13) or carrier plate (9).

19. Cylinder head gasket according to one of Claims 12 to 18, **characterized in that** the respective deformation limiter (7, 8) is designed as a separate ring or ring section.

## Revendications

1. Joint de culasse métallique pour un moteur à combustion interne comportant un bloc-cylindre présentant des chambres de combustion avoisinantes et une culasse raccordée à celui-ci par des boulons, pourvu au moins d'une couche de tôle (1) réalisée dans un métal élastique, qui est dotée d'un ou plusieurs orifices de chambre de combustion (2) correspondant aux chambres de combustion du moteur à combustion interne, ainsi que d'orifices pour le passage des boulons et du fluide (3, 4), pour lequel, autour de chaque orifice de chambre de combustion (2), à une certaine distance de celui-ci, en laissant une section de tôle (6) droite dans la zone du bord de l'orifice, il est prévu une moulure (5) dont le déplacement élastique est délimité par un limiteur de déformation (7, 8) s'étendant de manière concentrique par rapport à la moulure (5), pour lequel le limiteur de déformation (7,8) est profilé en hauteur et / ou en largeur en fonction des diminutions de la pression de moulage escomptées dans certaines zones en raison d'une rigidité réduite du composant de bloc-cylindre et de culasse dans l'état serré du joint de culasse,
**caractérisé en ce que**, pour le profilage en hauteur et / ou en largeur du limiteur de déformation (7, 8), on prend en outre en considération l'augmentation de la pression de moulage suite aux dilatations thermiques escomptées en raison de la température de fonctionnement du moteur à combustion interne, **en ce que** le profilage est sensiblement établi en fonction d'une zone médiane entre l'augmentation de la pression de moulage sous l'effet de la dilatation thermique et la diminution de la pression de moulage sous l'effet de la rigidité des composants, ou **en ce que** le limiteur de déformation (7, 8) présente une hauteur constante, et une tôle support (9) est dotée d'un profilage en hauteur, de telle sorte qu'il en résulte globalement un profilage correspondant sensiblement à une zone médiane entre l'augmentation de la pression de moulage sous l'effet de la dilatation thermique et une diminution de la pression de moulage sous l'effet de la rigidité du composant, moyennant quoi le limiteur de déformation (7, 8) est disposé dans la zone du profilage en hauteur de la tôle support (9).

2. Joint de culasse selon la revendication 1, **caractérisé en ce que** le profilage en hauteur du limiteur de déformation (7, 8) est matricé.

3. Joint de culasse selon l'une quelconque des revendications 1 ou 2, **caractérisé en ce que** la hauteur du limiteur de déformation (7, 8) est réduite dans la zone de traverse entre deux orifices de chambre de combustion (2) avoisinants par rapport à la hauteur de la zone des orifices de passage des boulons (4) avoisinants.

4. Joint de culasse selon l'une quelconque des revendications 1 à 3, **caractérisé en ce que**, des deux côtés de la moulure (5) respective, est disposé un limiteur de déformation (7, 8).

5. Joint de culasse selon la revendication 4, **caractérisé en ce que** le limiteur de déformation intérieur (7) est plus haut que le limiteur de déformation extérieur (8).

6. Joint de culasse selon la revendication 4, **caractérisé en ce que** le limiteur de déformation intérieur (7) est aussi haut que le limiteur de déformation extérieur (8).

7. Joint de culasse selon la revendication 4, **caractérisé en ce que** le limiteur de déformation intérieur (7) est plus bas que le limiteur de déformation extérieur (8).

8. Joint de culasse selon l'une quelconque des revendications 1 à 3, dans lequel seul un limiteur de déformation intérieur ou un limiteur de déformation extérieur (7, 8) est prévu pour chacune des moulures (5).

9. Joint de culasse selon l'une quelconque des revendications 1 à 8, **caractérisé en ce que** le limiteur de déformation (7, 8) respectif est réalisé sur un anneau (13) ou une tôle support (9) par refoulage.

10. Joint de culasse selon l'une quelconque des revendications 1 à 8, **caractérisé en ce que** le limiteur de déformation (7, 8) respectif est configuré sous la forme d'un anneau séparé ou d'une section annulaire.

11. Joint de culasse selon l'une quelconque des revendications 1 à 10, **caractérisé en ce que** deux tôles de revêtement (1, 1') moulées sont prévues, lesquelles sont orientées de manière symétrique l'une par rapport à l'autre avec les sommets de moulures, entre lesquelles se trouvent le limiteur de déformation (7, 8), le cas échéant sur une tôle support (9) séparée.

12. Joint de culasse métallique pour un moteur à combustion interne comportant un bloc-cylindre (12) présentant des chemises de cylindre (11) et une culasse raccordée à celui-ci par l'intermédiaire de boulons, pourvu au moins d'une tôle de revêtement (1, 1') réalisée dans un métal élastique, et une tôle support (9), qui est dotée d'un ou plusieurs orifices de chambre de combustion (2) correspondant aux chambres de combustion d'un moteur à combustion interne, et d'orifices de passage de boulons et de fluide (3, 4), pour lequel la au moins une tôle de revêtement (1, 1') présente, autour de chaque orifice de chambre de combustion (2), à une certaine distance de celui-ci, en laissant une section de tôle droite (6), dans la zone de bord de l'orifice, une moulure (5), dont le déplacement élastique est délimité par un limiteur de déformation extérieur (8) s'étendant sur son côté extérieur de manière concentrique par rapport à la moulure (5) et supporté par la tôle support (9), le limiteur de déformation extérieur (8) étant profilé en hauteur et / ou en largeur en fonction des réductions de pression de moulage escomptées dans certaines zones en raison de la rigidité réduite du composant de bloc-cylindre et de la culasse à l'état serré du joint de culasse,
**caractérisé en ce que** les moulures (5) sont disposées à une certaine distance du bord de la chambre de combustion, de telle sorte qu'elles reposent sur le bloc-cylindre (12) à proximité des chemises de cylindre (11), et **en ce que**, sur le côté intérieur de chaque moulure (5) est prévu un limiteur de déformation intérieur (7) profilé en largeur et / ou en hauteur par rapport à la rigidité du composant, supporté par la tôle support (9), le profilage en hauteur / et ou en largeur du limiteur de déformation (7, 8) prenant en outre en compte l'augmentation de la pression de moulage suite à des dilatations thermiques escomptés en raison de la température de fonctionnement du moteur à combustion interne, **en ce que** le profilage est établi sensiblement en fonction d'une zone médiane entre l'augmentation de la pression de moulage sous l'effet de la dilatation thermique et une diminution de pression de moulage en raison de la rigidité du composant, ou en ce que le limiteur de déformation (7, 8) présente une hauteur constante et il est prévu une tôle support (9) avec un profilage en hauteur de telle sorte qu'il apparaît globalement un profilage correspondant sensiblement à une zone médiane entre l'augmentation de la pression de moulage sous l'effet de la dilatation thermique et la diminution de la pression de moulage sous l'effet de la rigidité du composant, pour lequel le limiteur de déformation (7, 8) est disposé dans la zone du profilage en hauteur de la tôle support (9).

13. Joint de culasse selon la revendication 12, **caractérisé en ce que** le profilage en hauteur du limiteur de déformation (7, 8) est matricé.

14. Joint de culasse selon l'une quelconque des revendications 12 ou 13, **caractérisé en ce que** la hauteur du limiteur de déformation (7, 8) dans la zone de traverse entre deux orifices de chambre de combustion avoisinantes (2) est réduite par rapport à la hauteur dans la zone des orifices de passage de boulons (4) avoisinants.

15. Joint de culasse selon l'une quelconque des revendications 12 à 14, **caractérisé en ce que** le limiteur de déformation intérieur (7) est plus haut que le limiteur de déformation extérieur (8).

16. Joint de cylindre selon l'une quelconque des revendications 12 à 14, **caractérisé en ce que** le limiteur de déformation intérieur (7) est aussi haut que le limiteur de déformation extérieur (8).

17. Joint de culasse selon l'une quelconque des revendications 12 à 14, **caractérisé en ce que** le limiteur de déformation intérieur (7) est plus bas que le limiteur de déformation extérieur (8).

18. Joint de culasse selon l'une quelconque des revendications 12 à 17, **caractérisé en ce que** le limiteur de déformation (7, 8) respectif est retenu sur un anneau (13) ou une tôle support (9).

19. Joint de culasse selon l'une quelconque des revendications 12 à 18, **caractérisé en ce que** le limiteur de déformation (7, 8) respectif est configuré sous la forme d'un anneau séparé ou section annulaire.
